# EUROPEAN PATENT APPLICATION

(11) **EP 1 206 000 A2**
(43) Date of publication of application: **15.05.2002**
(21) Application number: 01126950.3
(22) Date of filing: 13.11.2001
(51) Int. Cl.: H01Q 1/24, H01Q 9/16, H01Q 3/26

(54) **Portable communication terminal with reduced specific absorption rate**

(30) Priority: 13.11.2000 JP 2000345447; 13.11.2000 JP 2000345448
(71) Applicant: SAMSUNG ELECTRONICS CO., LTD., Suwon-City, Kyungki-do (KR); Samsung Yokohama Research Institute, Yokohama 230-0027 (JP)
(72) Inventor: Shinichi, Haruyama, Yokohama 230-0027 (JP); Tsutomu, Mitsui, Yokohama 230-0027 (JP)
(74) Representative: Grünecker, Kinkeldey, Stockmair & Schwanhäusser Anwaltssozietät

(57) **Abstract**

Disclosed is a portable communication terminal including a miniature and inexpensive internal type antenna capable of achieving a reduction in SAR. A 1/2λ dipole antenna is mounted on a surface of a printed circuit board (PCB), mounted in a telephone body, opposite to the PCB surface to which a speaker is mounted. The dipole antenna is formed in the form of an antenna pattern on an antenna PCB arranged on the PCB of the phone body. In accordance with this configuration, resonant current flows only through the dipole antenna. Also, no earth current flows through the PCB. Accordingly, radiating electromagnetic fields are shielded by the ground pattern of the PCB. Since the head of the user is positioned close to the speaker of the PCB under the condition of use of the portable telephone, the PCB serves as a shield plate for shielding radiating electromagnetic fields, thereby reducing the intensity of electromagnetic fields acting around the head. Thus, a reduction in SAR is achieved.

## Description

The present invention relates generally to a portable communication terminal, and in particular, to a portable communication terminal capable of achieving a reduction in specific absorption rate (SAR).

As the use of portable communication terminals such as a portable telephone, a personal handyphone system (PHS) or a personal digital assistant (PDA) has increased, much attention has been paid to the effects (such as SAR) on the human body, in particular, the head, when it is exposed to electromagnetic waves radiated from these portable communication terminals. SAR (Specific Absorption Rate) is a measure of the intensity of electromagnetic waves per mass absorbed by the human body when exposed to electromagnetic fields. In a portable communication terminal, current concentrates on the antenna of the terminal. As a result, electromagnetic fields are concentrated about the head of the user to which a radiation source, for example, the feeding point of the antenna, is closely positioned. This results in an increase in SAR. Currently, a number of research efforts are being made to achieve a reduction in SAR. Also, guidelines for the protection of the human body from electromagnetic waves are being established.

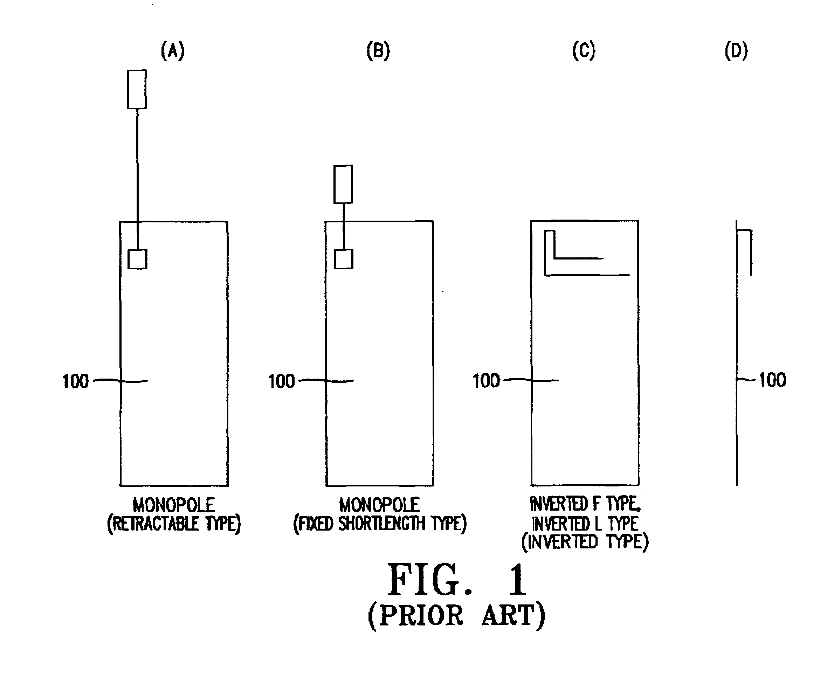

Figs. 1a to 1d illustrate various types of monopole antennas widely used in conventional portable telephones. Fig. 1a illustrates a retractable type, and Fig. 1b illustrates a fixed short-length type. Figs. 1c and 1d show internal types, that is, an inverted F type and an inverted L type, respectively. In Figs. 1a to 1d, the reference numeral 100 denotes a printed circuit board (PCB) of the terminal.

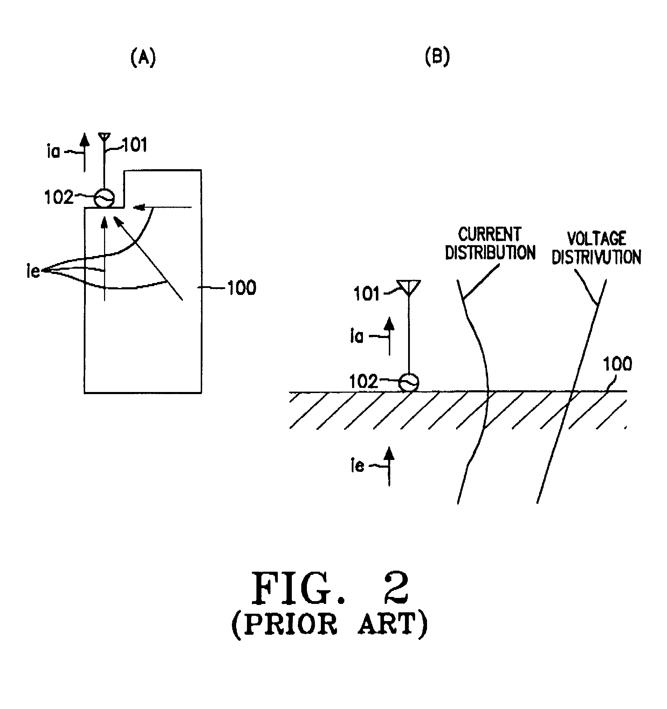

Figs. 2a and 2b illustrate the structure of a monopole antenna in a conventional portable phone, the antenna current, the earth current, and the current and voltage distributions exhibited during the operation of the antenna. Referring to Fig. 2a, a PCB 100 mounted to a phone body is illustrated. As shown in Fig. 2a, a 1/4·λ monopole antenna 101 is connected to the PCB 100 via a feeding point 102. This monopole antenna has an antenna structure including an antenna element and an earth plate to resonate at a certain frequency. Accordingly, antenna current *ia* flowing through the antenna causes earth current *ie* to flow through the PCB 100 serving as the earth plate, as shown in Fig. 2a.

Fig. 2b illustrates current and voltage distributions of the antenna current *ia* and earth current *ie*.

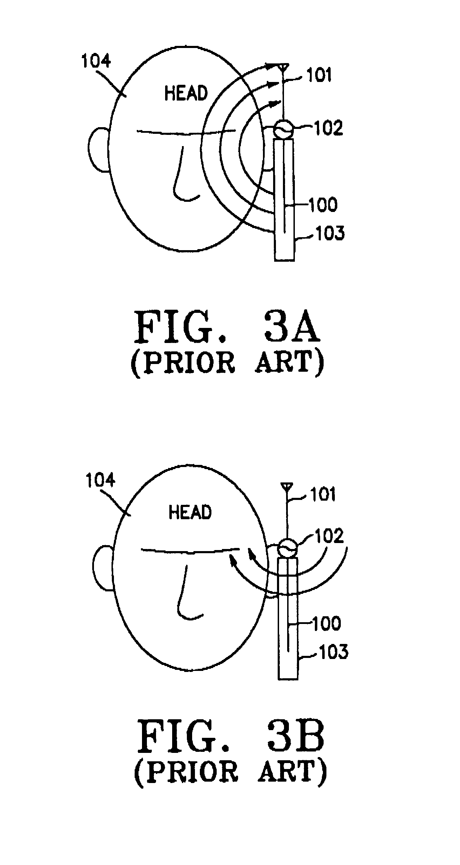

Figs. 3a and 3b illustrate distributions of a near electric field and a near magnetic field formed due to the antenna current *ia* and earth current *ie* flowing during the operation of the antenna. In Figs. 3a and 3b, the reference numeral 103 denotes a phone body, and the reference numeral 104 denotes the head of the user. As shown in Figs. 3a and 3b, electromagnetic fields concentrate on a position near the head 104. As a result, an increase in SAR occurs.

It may be possible to achieve a reduction in SAR in the above-mentioned structure of Figs. 2a, 2b, 3a and 3b by reducing the intensity of near electromagnetic fields acting around the head of the user. In this correction, however, the antenna structure of Figs. 2a, 2b, 3a and 3b has the following problems:
(1) In the above mentioned 1/4·λ monopole antenna structure, earth current *ie* flows through the PCB 100 of the phone body 103 because the PCB 100 serves as an earth plate. However, it is difficult to control the earth current *ie* flowing through the PCB 100. For this reason, it is difficult to control near electromagnetic fields acting around the head of the user in order to reduce the intensity thereof;
(2) Antenna current *ia* concentrates on a position near the feeding point 102 of the antenna. The head 5, however, is typically positioned close to the feeding point 102. Taking this fact into consideration, use of a separate shield plate has been proposed in order to reduce radiation of electromagnetic intensity toward the head. In the above mentioned monopole antenna structure, however, poor shielding effects are obtained because the earth current *ie* flowing through the PCB also flows through the shield plate;
(3) Since conventional monopole antennas have a linear structure, they are less preferred than internal type antennas; and
(4) Although inverted F type or inverted L type antennas formed by machining a metal plate are known as internal type antennas, they cannot reduce SAR because earth current flows, as in dipole antennas.

Therefore, the object of the present invention is to provide a portable communication terminal including a miniature and inexpensive internal type antenna capable of achieving a reduction in SAR.

According to an aspect of the present invention, there is provided a portable communication terminal having an antenna system capable of achieving a reduction in SAR while securing superior communication characteristics.

In accordance with one further aspect, the present invention provides a portable communication terminal comprising a dipole antenna arranged on a surface of a printed circuit board included in the terminal, the surface being opposite to a surface of the printed circuit board to which a speaker is mounted. Preferably, the dipole antenna is formed in the form of an antenna pattern on an antenna board mounted on the printed circuit board. The antenna pattern preferably has a multi-layered pattern structure formed on the antenna board and folded at least one time.

In accordance with another aspect, the present invention provides a portable communication terminal comprising a plurality of dipole antennas adapted to simultaneous perform the same communication, and phase control means for controlling respective phases of powers to be fed to the dipole antennas. The portable communication terminal may further comprise power distribution ratio adjusting means for adjusting a distribution ratio of powers to be respectively fed to the dipole antennas.

The above objects and advantages of the present invention will become more apparent by describing in detail preferred embodiments thereof with reference to the attached drawings in which:
Figs. 1a to 1d illustrate various types of monopole antennas used in conventional portable telephones;
Figs. 2a and 2b are views illustrating the structure of a monopole antenna in a conventional portable phone, an antenna current, an earth current, and a current and voltage distributions exhibited during the operation of the antenna;
Figs. 3a and 3b illustrate distributions of an electric field and a magnetic field acting around the head of the user;
Figs. 4a to 4c are schematic views illustrating a principal antenna structure in a portable telephone as a portable communication terminal according to the present invention, in which Fig. 4a is a plan view, Fig. 4b is a side view, and Fig. 4c is a front view illustrating the condition of use of the portable telephone;
Figs. 5a and 5b are plan and side views respectively illustrating an antenna structure according to a first embodiment of the present invention;
Fig. 6 is a plan view illustrating an antenna PCB;
Fig. 7 is a circuit diagram illustrating an electrical circuit configuration in the antenna structure according to the first embodiment of the present invention or an antenna structure according to a second embodiment of the present invention;
Fig. 8 principally illustrates a folded dipole antenna according to the second embodiment of the present invention;
Fig. 9 illustrates an example of the folded dipole antenna;
Fig. 10 illustrates another example of the folded dipole antenna;
Figs. 11a and 11b are front and side views respectively illustrating an antenna structure in a portable telephone according to a third embodiment of the present invention;
Fig. 12 is a block diagram illustrating a power feeding circuit unit;
Figs. 13a and 13b are front and side views schematically illustrating a PCB included in a phone body installed with two dipole antennas according to the present invention;
Fig. 13c is a front view illustrating the relation between the phone body and the head of the user; and
Figs. 14a and 14b are plan views schematically illustrating relations among phases of power to be respectively fed to the dipole antennas and electromagnetic fields acting around the head of the user.

Now, preferred embodiments of the present invention will be described in detail, with reference to the annexed drawings. In the drawings, the same or similar elements are denoted by the same reference numerals even though they are depicted in different drawings. In the following description made in conjunction with preferred embodiments of the present invention, a variety of specific elements such as constituting elements of various concrete circuits and telephone numbers are described. The description of such elements has been made only for a better understanding of the present invention. Those skilled in the art will appreciate that the present invention can be implemented without using the above-mentioned specific elements. In the following description of the present invention, a detailed description of known functions and configurations incorporated herein will be omitted when it may make the subject matter of the present invention rather unclear.

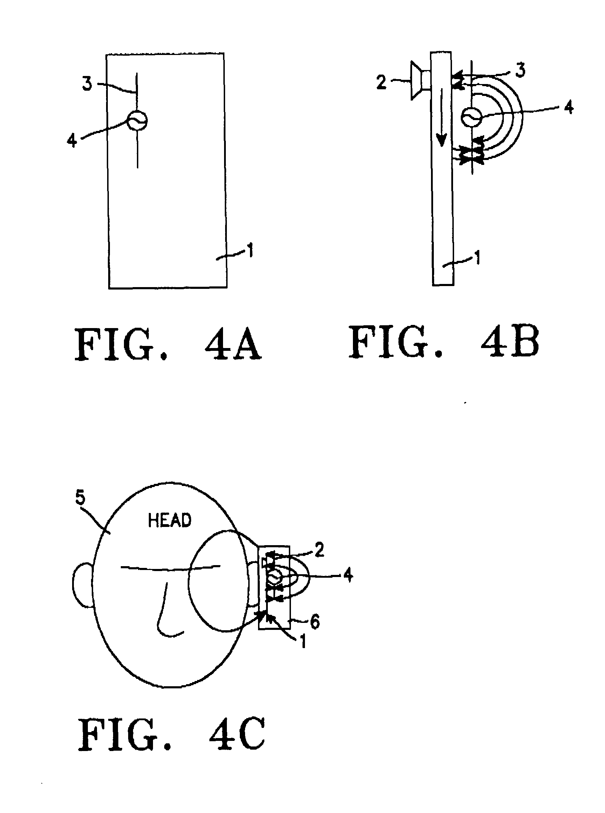

Figs. 4a to 4c are schematic views illustrating a principal antenna structure in a portable telephone as a portable communication terminal according to the present invention. Fig. 4a is a plan view, Fig. 4b is a side view, and Fig. 4c is a front view illustrating the condition of use of the portable telephone. Referring to Figs. 4a to 4c, a PCB 1 mounted in a phone body is illustrated. A 1/2λ dipole antenna (balanced power feeding antenna) 3 is mounted on a surface of the PCB 1 opposite to the PCB surface to which a speaker 2 is mounted. In Figs. 4a to 4c, the reference numeral 4 denotes a power feeding circuit for the dipole antenna 3, the reference numeral 5 denotes the head of the user, and the reference numeral 6 denotes the phone body.

In accordance with the above configuration, resonant current flows only through the dipole antenna 3. Also, no earth current flows through the PCB 1. Accordingly, radiating near electromagnetic fields are shielded by the ground pattern of the PCB 1, as shown in Fig. 4b. Under the condition of use of the portable telephone shown in Fig. 4c, the head 5 of the user is positioned close to the speaker 2 of the PCB 1. Accordingly, the ground pattern of the PCB 1 made of glass epoxy serves as a shield plate for shielding radiating electromagnetic fields, thereby reducing the intensity of electromagnetic fields acting around the head 5. Thus, a reduction in SAR is achieved.

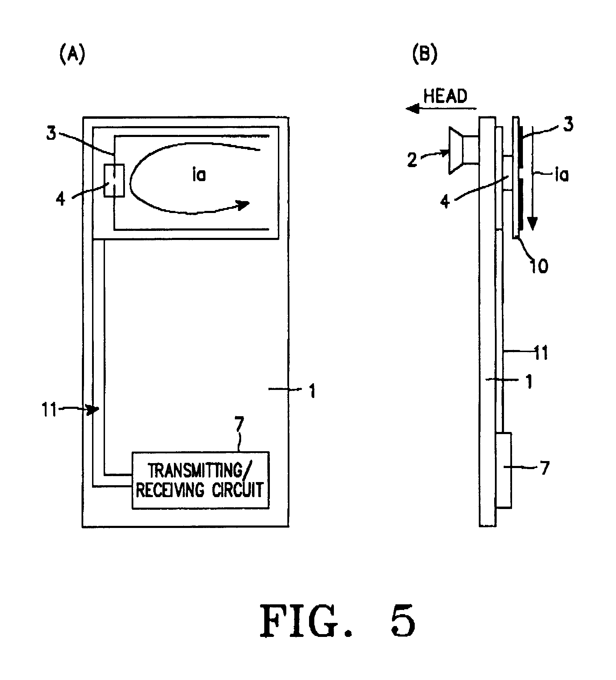

Figs. 5a and 5b illustrate an antenna structure according to a first embodiment of the present invention based on the principle of Figs. 4a to 4c. Fig. 5a is a plan view, and Fig. 5b is a side view of the antenna structure. A transmitting/receiving circuit 7 is arranged at a lower portion of the PCB 1. At an upper portion of the PCB 1, a power feeding circuit 4 is arranged which comprises a balance/unbalance transformer, that is, a balun. An antenna PCB 10, to which the dipole antenna 3 is attached, is mounted on the power feeding circuit 4. In a general portable telephone, typically, an antenna is arranged at the upper portion of the PCB, and a transmitting/receiving circuit is arranged at the lower portion of the PCB.

The power feeding circuit 4 and transmitting/receiving circuit 7 are connected together by a coaxial cable (semi-rigid cable). The speaker 2 is mounted to the surface of the PCB 1 opposite to the PCB surface on which the circuits are arranged.

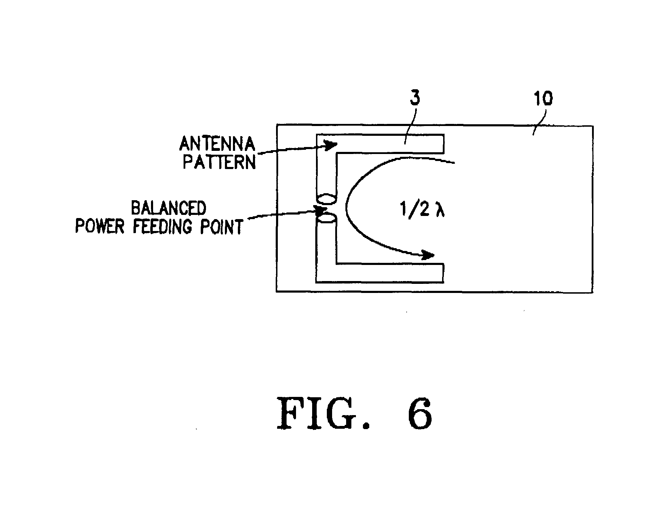

Fig. 6 illustrates the antenna PCB 10. As shown in Fig. 6, an antenna pattern is formed on the antenna PCB 10 to form the 1/2λ dipole antenna 3. The antenna PCB 10 is made of glass epoxy, and has a desired size of, for example, 20 x 35 x 1.0 (mm). There is no increase in manufacturing costs involved with the fabrication of the antenna PCB 10 having the above-mentioned structure. This is because the antenna pattern can be formed using the same process as the process of fabricating the above mentioned PCB.

The antenna PCB 10 is mechanically fixed at a position determined taking into consideration the radiation pattern of the antenna in the portable telephone along with SAR. In the illustrated embodiment, the PCB 1 is mechanically fixed at a position where it can serve as a shield plate for shielding electromagnetic fields, as shown in Figs. 4b and 5b. In accordance with such an arrangement, it is possible to reduce SAR while obtaining an optimum radiation pattern.

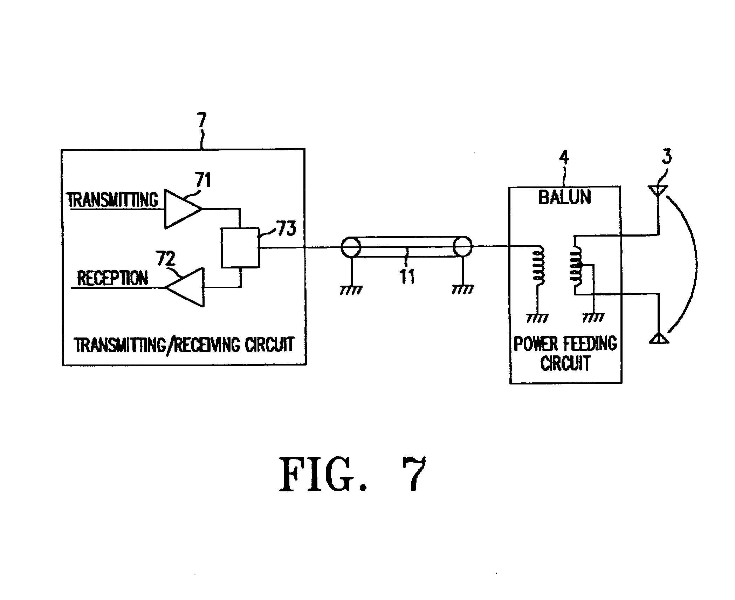

Fig. 7 is a circuit diagram illustrating an electrical circuit configuration in the antenna structure having the configuration described herein above. As shown in Fig. 7, the transmitting/receiving circuit 7 includes a transmitting amplifier 71, a receiving amplifier 72, and a duplexer 73. The power feeding circuit 4 is provided with a balun so that it is connected to the dipole antenna 3. The transmitting/receiving circuit 7 and power feeding circuit 4 are connected together by a coaxial cable 11.

Referring to Fig. 6, a dipole antenna having a reduced size is illustrated. In this dipole antenna, an input impedance is less than a generally used power feeding impedance corresponding to 50Ω. Accordingly, it is preferable to increase the input impedance so that the input impedance matches with the power feeding impedance.

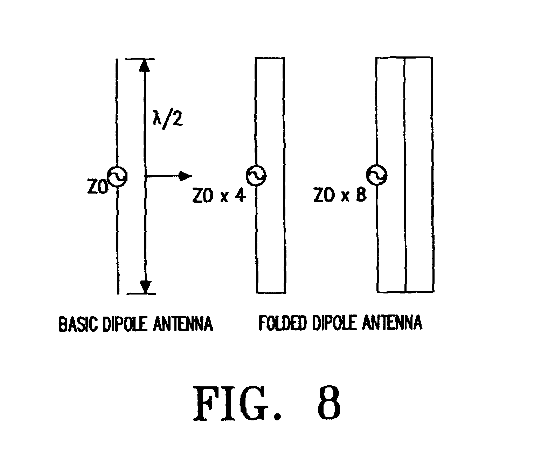

Fig. 8 illustrates a principle according to a second embodiment of the present invention in which a folded dipole antenna is formed on the antenna PCB. Referring to Fig. 8, it can be seen that the input impedance of a dipole antenna having a folded pattern formed on the antenna PCB is higher than the input impedance of a basic dipole antenna. As illustrated in Fig. 8, the input impedance Z0 is increased four times when the antenna pattern is folded one time. In the case of the antenna pattern folded two times, the input impedance Z0 is increased 8 times.

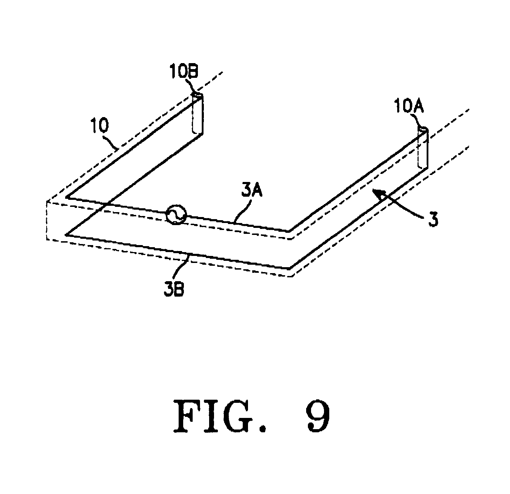

Fig. 9 illustrates an example of such a folded dipole antenna. In the case of Fig. 9, the antenna PCB 10 has a double-layered structure. Antenna patterns 3A and 3B are formed on opposite surfaces of the antenna PCB 10, respectively. The patterns 3A and 3B are connected together via through holes 10A and 10B formed at the antenna PCB 10. Thus, a dipole antenna 3 having a folded pattern structure is completely formed.

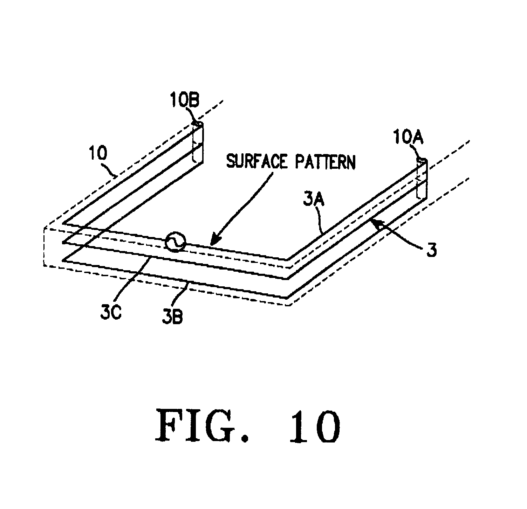

Fig. 10 illustrates another example of a folded dipole antenna. In the case of Fig. 10, the antenna PCB 10 has a triple-layered structure. Here, antenna patterns 3A and 3B are formed on opposite surfaces of the antenna PCB 10, respectively. This structure also has an intermediate layer formed with an intermediate pattern 3C. These three patterns 3A, 3B and 3C are connected together via through holes 10A and 10B. Thus, a dipole antenna 3 having a folded pattern structure is completely formed.

The circuit configuration used in the folded dipole antenna of Fig. 9 or 10 is the same as that of Fig. 7. In accordance with the configuration of Fig. 9 or 10, it is possible to realize a miniature and inexpensive dipole antenna having a superior impedance matching.

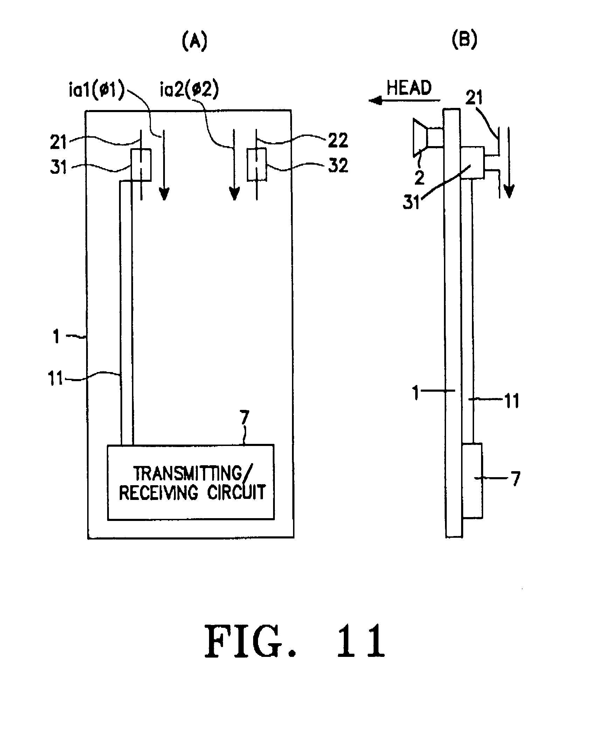

Figs. 11a and 11b illustrate an antenna structure in a portable telephone, such as a portable communication terminal, according to a third embodiment of the present invention. Fig. 11a is a plan view, and Fig. 11b is a side view of the antenna structure. In Figs. 11a and 11b, the reference numeral 1 denotes a PCB mounted in a phone body, the reference numeral 21 denotes a first dipole antenna (balanced power feeding type antenna) arranged at an upper portion of the PCB 1, and the reference numeral 22 denotes a second dipole antenna arranged at the upper portion of the PCB 1. The reference numeral 31 denotes a power feeding circuit of the dipole antenna 21, and the reference numeral 32 denotes a power feeding circuit of the dipole antenna 22. The reference numeral 6 denotes a transmitting/receiving circuit arranged at a lower portion of the PCB 1. In a general portable telephone, typically, an antenna is arranged at the upper portion of the PCB, and a transmitting/receiving circuit is arranged at the lower portion of the PCB, as shown in Figs. 11a and 11b. The reference numeral 7 denotes a coaxial cable (semirigid cable) for connecting the transmitting/receiving circuit 7 to a power distributor/combiner formed at the upper portion of the PCB 1. The reference numeral 8 denotes a speaker attached to a surface of the PCB 1 opposite to the PCB surface on which the dipole antennas are arranged.

Antenna current ia1 having a phase Φ1 flows through the dipole antenna 21, whereas antenna current ia2 having a phase Φ2 flows through the dipole antenna 22. The dipole antennas 21 and 22 are used to simultaneously transmit and receive the same signal.

In accordance with the third embodiment, power from the transmitting/receiving circuit 7 is fed, via the coaxial cable, to a microstrip circuit included in a power feeding circuit unit, which includes the power feeding circuits 31 and 32 arranged at the upper portion of the PCB 1. The fed power is then distributed to the two dipole antennas by a power distributing circuit. The power feeding circuit unit and power distributing circuit will be described hereinafter. Feeding of power to respective antennas may be achieved by connecting the transmitting/receiving circuit 6 to the power feeding circuit 31 by the coaxial cable 11 while connecting the transmitting/receiving circuit 7 to the power feeding circuit 32 by a separate coaxial cable.

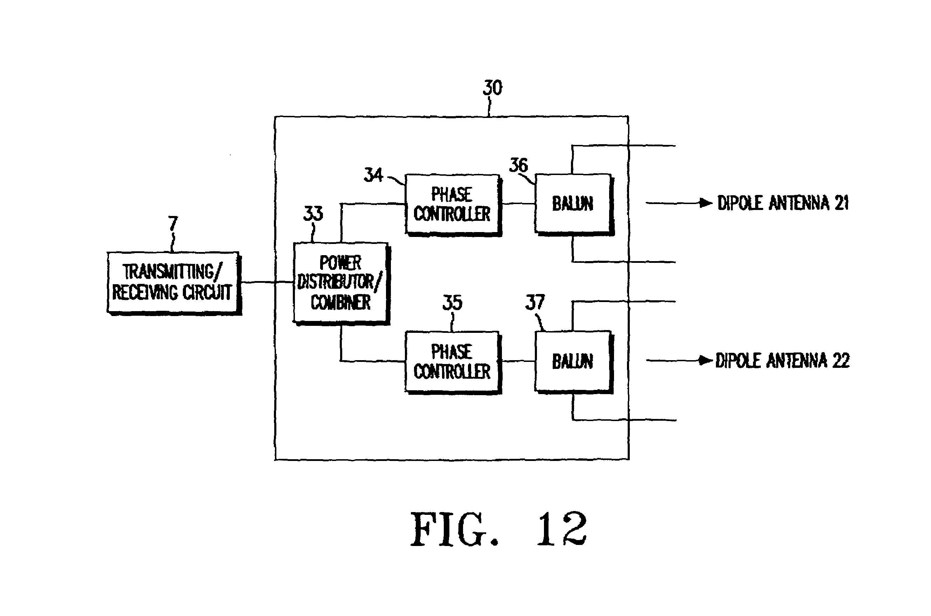

Fig. 12 is a block diagram illustrating the power feeding circuit unit composed of the power feeding circuits 31 and 32. In Fig. 12, this power feeding circuit unit is denoted by the reference numeral 30. The power feeding circuit unit 30 includes a power distributor/combiner 33 connected to the transmitting/receiving circuit 7 by the coaxial cable 11, phase controllers 34 and 35 respectively adapted to control the antenna currents ia1 and ia2, and balance/unbalance transformers (baluns) 36 and 37 adapted to unbalance/balance-transform respective phase-controlled currents, and to supply the transformed currents to the respective antennas.

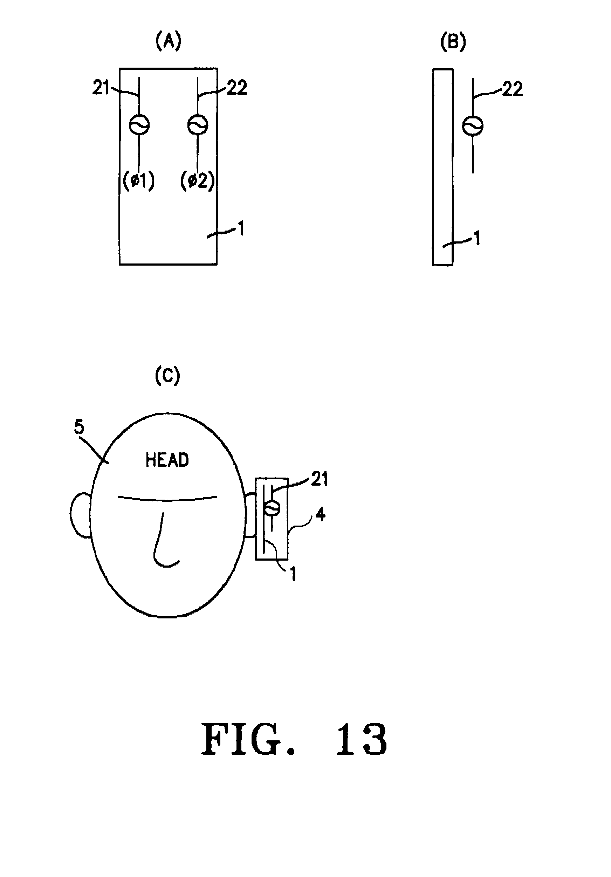

Now, the operation of the above mentioned circuit configuration will be described in detail. Figs. 13a and 13b are views schematically illustrating the dipole antennas 21 and 22 along with the phases Φ1 and Φ2 of their antenna currents. Fig. 13c is a front view illustrating the relation of the phases Φ1 and Φ2 with the head 5 of the user.

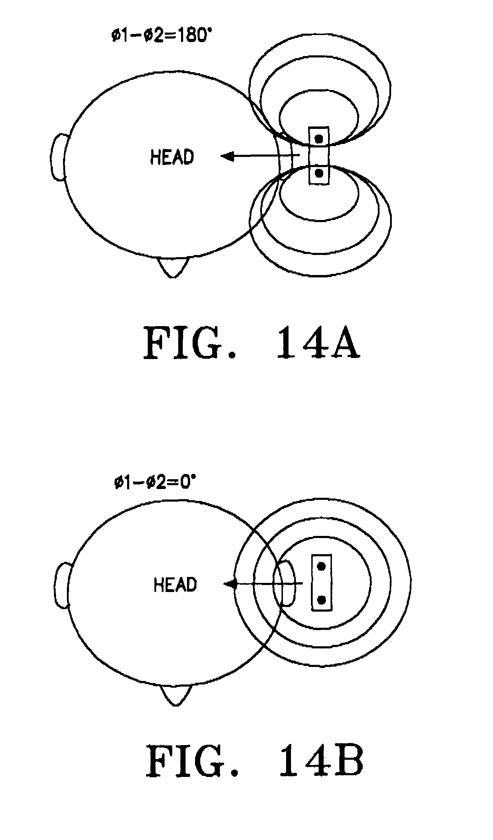

Figs. 14a and 14b are plan views schematically illustrating relations among the phases Φ1 and Φ2, head 5 and the near electromagnetic fields.

Referring to Fig. 12, signal power transmitted from the transmitting/receiving circuit 7 is half distributed to the phase controllers 34 and 35 by the power distributor/combiner 33. The phase controllers 34 and 35 controls the distributed powers to have desired phases Φ1 and Φ2. The powers are then unbalance/balance-transformed in terms of transmission mode by the baluns 36 and 37 that, in turn, supply the mode-transformed powers from their power feeding terminals to the dipole antennas 21 and 22, respectively. As a result, the dipole antennas 21 and 22 resonate. Thus, a double dipole antenna function is carried out.

In this case, electromagnetic fields acting around the head 5 can be mutually offset by appropriately adjusting respective phases Φ1 and Φ2 of the antenna currents ia1 and ia2 by the phase controllers 34 and 35 in order to allow those phases to have a phase difference of, for example, 180°, as shown in Fig. 14a. Accordingly, it is possible to reduce the intensity of the electromagnetic fields, thereby reducing SAR.

Of course, the intensity of electromagnetic fields acting around a position opposite to the head 5 is also reduced. At that position, a reduction in antenna gain also occurs. However, a superior communication performance can be obtained by adjusting the power distribution ratio of the power distributor/combiner 33, and the phases of the phase controllers 34 and 35 so as to obtain an optimum radiation pattern while achieving an optimum reduction in SAR.

Although the present invention has been described in conjunction with the embodiments in which two dipole antennas are installed, it is possible to install three or more dipole antennas while adjusting respective power feeding phases and the power distribution ratio for those dipole antennas. The present invention is not limited to portable telephones, but is applicable to other portable communication terminals such as PHSs or PDAs.

As apparent from the above description, the present invention provides a portable communication terminal in which dipole antennas are arranged on a surface of a PCB, included in the terminal, opposite to the PCB surface to which a speaker is mounted. Accordingly, it is possible to reduce the intensity of electromagnetic fields acting around the head of the user without preventing the flowing of earth current through the PCB, thereby reducing SAR. The dipole antennas are formed in the form of antenna patterns on an antenna board. Accordingly, the formation of the dipole antennas can be carried out using the same process as the process of fabricating the PCB. As a result, it is possible to easily realize a miniature and inexpensive internal type antenna structure. It is also possible to realize an inexpensive antenna having a superior impedance matching by forming the antenna pattern on the antenna board to have a multi-layered pattern structure folded at least one time.

While this invention has been described in connection with what is presently considered to be the most practical and preferred embodiment, it is to be understood that the invention is not limited to the disclosed embodiment, but, on the contrary, it is intended to cover various modifications within the spirit and scope of the appended claims.

## Claims

1. A portable communication terminal comprising:
a plurality of dipole antennas adapted to simultaneously perform a same communication; and
phase control means for controlling respective phases of powers to be fed to the dipole antennas.

2. The portable communication terminal according to claim 1, further comprising:
power distribution ratio adjusting means for adjusting a distribution ratio of powers to be respectively fed to the dipole antennas.

3. The portable communication terminal according to claim 1 or 2, wherein:
the plurality of dipole antennas is arranged on a surface of a printed circuit board included in the terminal, the surface being opposite to a surface of the printed circuit board to which a speaker is mounted.

4. A portable communication terminal comprising:
a dipole antenna arranged on a surface of a printed circuit board included in the terminal, the surface being opposite to a surface of the printed circuit board to which a speaker is mounted.

5. The portable communication terminal according to claim 4, wherein the dipole antenna is formed in an antenna pattern on an antenna board mounted on the printed circuit board.

6. The portable communication terminal according to claim 5, wherein the antenna pattern has a multi-layered pattern structure formed on the antenna board and folded at least one time.
